# FASCICULE DE BREVET EUROPEEN

(11) **EP 3 982 002 B1**
(45) Date de publication et mention de la délivrance du brevet: **14.08.2024**
(21) Numéro de dépôt: 21201811.3
(22) Date de dépôt: 11.10.2021
(51) Int. Cl.: F16F 1/38, F16F 1/387

(54) **DISPOSITIF D'AMORTISSEMENT BI-MATÉRIAUX POUR ENGIN SPATIAL ET PROCÉDÉ DE FABRICATION DU DISPOSITIF D'AMORTISSEMENT**
DÄMPFUNGSVORRICHTUNG AUS ZWEI MATERIALIEN FÜR RAUMFAHRZEUGE UND VERFAHREN ZUR HERSTELLUNG DIESER DÄMPFUNGSVORRICHTUNG
TWO-MATERIAL DAMPING DEVICE FOR SPACECRAFT AND METHOD FOR MANUFACTURING THE DAMPING DEVICE

(30) Priorité: 12.10.2020 FR 2010406
(43) Date de publication de la demande: 13.04.2022
(73) Titulaire: ArianeGroup SAS, 78130 Les Mureaux (FR)
(72) Inventeur: PYRE, Alain, 27207 Vernon Cedex (FR); LAMBERT, Océane, 27207 Vernon Cedex (FR); JOVER, Philippe, 27207 Vernon Cedex (FR)
(74) Mandataire: Cabinet Beau de Loménie

(56) Documents cités:
- EP-A1- 3 477 144
- US-A1- 2018 266 461

## Description

### Domaine Technique

Le présent exposé concerne le domaine des engins aéronautiques, et notamment des moteurs de fusée. Le présent exposé concerne en particulier un dispositif d'amortissement pour amortir les vibrations entre un composant à isoler du moteur de fusée et une structure porteuse de ce moteur, et un procédé de fabrication d'un tel dispositif.

### Technique antérieure

Les moteurs spatiaux à ergols liquides doivent fonctionner dans des ambiances vibratoires sévères. Ces vibrations peuvent être générées par leur fonctionnement propre, par les ondes de pression et les ondes acoustiques générées par les propulseurs d'appoint à poudre, ou encore par l'excitation dynamique que le lanceur impose aux moteurs à leurs points d'interface (cardans et accroches vérins). Ces vibrations du lanceur peuvent elles-mêmes résulter de l'excitation des propulseurs d'appoint à poudre, de l'excitation des moteurs cryogéniques, ou encore de l'excitation due aux charges aérodynamiques instationnaires dans l'atmosphère.

Certains composants ou équipements fixés sur le moteur ou sur les étages du lanceur ne peuvent tolérer de tels environnements vibratoires. Il est donc nécessaire de disposer de systèmes simples, légers et présentant un coût limité, pour amortir les vibrations transmises par les moteurs ou les étages sur ces composants ou équipements.

De manière connue, ces systèmes d'amortissement peuvent se classer en deux grandes familles : une première famille faisant appel à des amortisseurs tels que des amortisseurs mécaniques, pneumatiques, hydrauliques, passifs ou actifs, et une deuxième famille reposant sur l'insertion de matériaux dits « mous » et amortissants, entre le composant à protéger et la structure porteuse générant les fortes sollicitations dynamiques.

La première famille est très efficace en terme d'amortissement, mais généralement lourde, coûteuse et/ou complexe à mettre en oeuvre. La seconde famille présente l'inconvénient d'amortir moins bien que la première famille. Elle doit en outre ne pas être excessivement comprimée afin de ne pas compromettre sa fonction d'amortissement. Or, les efforts de serrage du composant à isoler sur sa structure porteuse doivent être souvent importants, pour résister aux charges dynamiques importantes, ce qui réduit considérablement l'efficacité d'amortissement de cette famille d'amortisseurs.

Il existe donc un besoin pour pallier, au moins en partie, aux inconvénients mentionnés ci-dessus.

De plus, le document EP3477144 A1 divulgue un dispositif d'amortissement, considéré comme l'état de la technique le plus proche.

### Exposé de l'invention

Le présent exposé concerne un dispositif d'amortissement pour engin spatial tel que défini dans la revendication 1, configuré pour amortir les vibrations entre un composant à isoler et une structure porteuse de l'engin spatial, le dispositif d'amortissement comprenant :
- une structure métallique obtenue par fabrication additive et comprenant une première pièce métallique configurée pour être fixée à l'un du composant à isoler ou de la structure porteuse, et une deuxième pièce métallique configurée pour être fixée à l'autre du composant à isoler ou de la structure porteuse,
- une structure d'amortissement en élastomère solide disposée entre la première pièce métallique et la deuxième pièce métallique, de manière à être en contact à la fois avec des parois de la première pièce métallique et avec des parois de la deuxième pièce métallique.

La première pièce métallique comprend un squelette externe et un logement interne à l'intérieur du squelette externe, la structure d'amortissement en élastomère solide étant disposée dans le logement interne, et la deuxième pièce métallique étant disposée au moins en partie à l'intérieur du logement interne de la première pièce métallique.

On comprend par « élastomère solide », un élastomère à l'état solide, tel que du caoutchouc, c'est-à-dire après solidification d'un élastomère à l'état liquide. Le logement interne de la première pièce métallique peut être initialement rempli d'un élastomère à l'état liquide, avant solidification par polymérisation de ce dernier. La deuxième pièce métallique étant disposée au moins en partie à l'intérieur du logement interne de la première pièce métallique, l'élastomère solidifié est donc en contact à la fois avec la première pièce métallique, plus précisément avec la paroi du squelette externe, et avec la deuxième pièce métallique.

Compte tenu de cette configuration, les mouvements de vibrations entrainent des mouvements relatifs entre la structure porteuse et le composant à isoler, engendrant par conséquent des mouvements relatifs entre la première pièce métallique solidaire de la structure porteuse, et la deuxième pièce métallique solidaire du composant à isoler. Ces mouvements relatifs entre la première et la deuxième pièce métallique engendrent un cisaillement de l'élastomère solide disposé à l'intérieur du logement interne et en contact avec la première et la deuxième pièce métallique.

Ces mouvements développent d'importantes contraintes dynamiques de cisaillement dans un volume important de l'élastomère, impliquant un grand pouvoir dissipatif et d'amortissement. Il est ainsi possible d'améliorer l'efficacité de l'amortissement, tout en limitant les coûts, la masse et la complexité du dispositif d'amortissement. En effet, l'utilisation de l'élastomère limite la masse totale du dispositif. De plus, le dispositif d'amortissement selon le présent exposé présente l'avantage d'être facile à réaliser. La structure métallique, comprenant la première et la deuxième pièce métallique, est en effet réalisée par fabrication additive, puis remplie d'un élastomère. L'état de surface des parties métalliques, réalisées par fabrication additive, ne requiert en outre pas d'exigences précises, ce qui permet de limiter d'avantage les coûts de fabrication. Au contraire, une plus forte rugosité tend à améliorer la résistance de la liaison entre l'élastomère et le métal.

Par ailleurs, ce dispositif d'amortissement présente l'avantage d'être modulable. En effet, en fonction de l'application, la structure métallique pourra être fabriquée dans divers matériaux (titane, superalliage base nickel, aluminium par exemple). La nature de l'élastomère pourra également être choisie en fonction des spécifications techniques du système (fréquences amorties ou tenue en température par exemple). L'élastomère pourra par exemple comprendre du polyuréthane, du néoprène, de l'élastomère butyl, ou tout autre type d'élastomère. On notera également que ce dispositif peut être réutilisable. En effet, il est possible de retirer chimiquement, ou par pyrolyse, l'élastomère présent dans le logement interne, puis de remplir à nouveau ce logement interne d'un nouvel élastomère à l'état de liquide, suivie de sa polymérisation.

Dans certains modes de réalisation, la première et la deuxième pièce métallique sont deux pièces distinctes reliées entre elles uniquement par la structure d'amortissement.

On comprend, selon cette configuration, qu'aucun contact métal-métal n'existe entre la première et la deuxième pièce métallique, à l'état initial. On comprend par « état initial », un état du dispositif d'amortissement en absence de sollicitation des pièces porteuses. La première et la deuxième pièce métallique, fixées respectivement à la structure porteuse et au composant à isoler, sont deux pièces indépendantes l'une de l'autre. Selon cette configuration, le dispositif d'amortissement peut avoir un effet d'amortissement jusqu'à ce qu'un contact entre la première et/ou la deuxième pièce métallique et la structure porteuse et/ou le composant à isoler, ou un contact entre la première et la deuxième pièce métallique, se produise.

Dans certains modes de réalisation, la structure métallique comprend au moins un élément de liaison métallique, la première et la deuxième pièce métallique étant reliées entre elles par la structure d'amortissement et par l'élément de liaison métallique.

On comprend, selon cette configuration, qu'un contact métal-métal existe entre la première et la deuxième pièce métallique, à l'état initial, par l'intermédiaire de l'élément de liaison métallique. Cet élément de liaison est fabriqué en même temps que la première et la deuxième pièce métallique, lors de la fabrication de la structure métallique par fabrication additive. L'élément de liaison s'étend dans le logement interne, entre le squelette externe et la deuxième pièce métallique. Le reste du volume du logement interne, c'est-à-dire la partie du logement interne ne comprenant pas l'élément de liaison, comprend la structure d'amortissement en élastomère.

La structure métallique est donc formée de manière monobloc, comprenant la première et la deuxième pièce métallique, et l'élément de liaison. En d'autres termes, selon cette configuration, la première et la deuxième pièce métallique sont deux parties distinctes de la structure métallique fixées respectivement à la structure porteuse et au composant à isoler, mais ne sont pas indépendantes l'une de l'autre. Le dispositif d'amortissement selon ce mode de réalisation a ainsi une raideur évolutive en fonction de l'intensité et de la direction du chargement. Cette configuration a, par ailleurs, l'avantage d'apporter un supplément d'amortissement grâce au caractère non linéaire de la raideur du dispositif, et de permettre de faire transiter par le dispositif des charges mécaniques plus importantes.

Dans certains modes de réalisation, l'élément de liaison métallique présente une structure de réseau en treillis, ou est un fil métallique souple.

La structure métallique est obtenue par fabrication additive de telle sorte qu'au moins une portion de la surface de la première pièce métallique et/ou de la deuxième pièce métallique, en contact avec la structure d'amortissement, présente une structure de réseau en treillis.

En d'autres termes, une partie de la surface interne du squelette externe, délimitant le logement interne, et/ou une partie de la surface de la portion de la deuxième pièce métallique disposée dans le logement interne, présente une structure de réseau en treillis. De manière alternative, la totalité de la surface de la première pièce métallique et de la deuxième pièce métallique en contact avec la structure d'amortissement en élastomère, présente une structure de réseau en treillis. Cette structure est prévue lors de la fabrication de la structure métallique par fabrication additive, dans laquelle l'élément de liaison, lorsqu'un tel élément est prévu, peut aussi être réalisé de manière à posséder une structure de réseau en treillis. Cette structure peut prendre par exemple la forme d'un réseau maillé, alternant les zones pleines et les zones vides, de manière analogue à un grillage.

Cette configuration permet de limiter davantage la masse du dispositif d'amortissement. Elle permet en outre d'améliorer la qualité de la liaison entre les parties métalliques et non-métalliques (élastomère), grâce à une imprégnation totale de l'élastomère à l'état de liquide dans le réseau métallique, avant polymérisation. Cette structure confère également à la structure métallique un état de surface présentant une rugosité accrue, améliorant la liaison entre la structure métallique et la structure d'amortissement. Par ailleurs, le design de maille du réseau en treillis peut être choisi de manière à permettre de maximiser les efforts de cisaillement.

Dans certains modes de réalisation, la première pièce métallique au moins présente une forme de tube comprenant un axe longitudinal, la deuxième pièce métallique étant disposée au moins en partie dans l'espace à l'intérieur du tube.

En d'autres termes, la première pièce métallique au moins présente une forme de tube comprenant un axe longitudinal, le squelette externe étant la paroi du tube, et le logement interne étant l'espace à l'intérieur du tube.

Selon cette configuration, la deuxième pièce métallique peut être un cylindre coaxial avec le tube formant la première pièce métallique et étant emmanché dans ce tube, de forme tubulaire, la première pièce métallique présentant un diamètre plus faible que le diamètre interne de la première pièce métallique. Une partie de la deuxième pièce métallique est ainsi à l'intérieur de la première pièce métallique, c'est-à-dire à l'intérieur du tube formé par le squelette externe. Cette partie de la deuxième pièce métallique à l'intérieur du tube, c'est-à-dire à l'intérieur du logement interne, est donc imprégnée dans la structure d'amortissement en élastomère. Elle peut en outre être espacée du squelette externe de la première pièce métallique, et donc séparée de ce dernier par la structure d'amortissement uniquement, ou être reliée à ce dernier, par l'intermédiaire de l'élément de liaison métallique.

Cette structure permet d'assurer une fonction d'amortissement pour différents mouvements du composant à isoler par rapport à la structure porteuse, notamment des déplacements axiaux le long de l'axe longitudinal du tube formant la première pièce métallique, des déplacements transverses par rapport à cet axe longitudinal, des rotations autour de cet axe, ou des flexions dans différentes directions.

Dans certains modes de réalisation, une pluralité de tiges métalliques radiales s'étendant dans la structure d'amortissement, faisant saillis radialement depuis la première pièce métallique ou la deuxième pièce métallique, et comprenant une extrémité libre disposée dans la structure d'amortissement.

Le terme « radial » et ses dérivés correspondent à une direction transversale par rapport à l'axe longitudinal du tube formant la première pièce métallique, ou du cylindre formant la deuxième pièce métallique, cette direction transversale étant perpendiculaire ou sensiblement inclinée par rapport à la direction longitudinale. De préférence, l'extrémité libre des tiges métalliques disposée dans la structure d'amortissement en étant imprégnées dans celle-ci, présente une forme sphérique.

La présence de ces tiges métalliques, notamment lorsqu'elles comprennent une sphère à leur extrémité libre, permet d'augmenter les contraintes de cisaillement dans la structure d'amortissement en élastomère, lors des déplacements relatifs entre la structure porteuse et le composant à isoler.

Dans certains modes de réalisation, le dispositif d'amortissement comprend des parois métalliques radiales faisant saillie depuis l'une de la première pièce métallique ou de la deuxième pièce métallique, les extrémités libres d'au moins une partie des tiges métalliques faisant saillie depuis l'autre de la première pièce métallique ou de la deuxième pièce métallique étant disposées entre deux parois métalliques.

En d'autres termes, lorsque les tiges métalliques s'étendent depuis la deuxième pièce métallique, les extrémités libres d'au moins certaines d'entre elles sont disposées entre deux parois métalliques radiales disposée sur la paroi interne du squelette externe de la première pièce métallique. Cette configuration permet de maximiser localement les contraintes de cisaillement dans la structure d'amortissement en élastomère.

Le présent exposé concerne également un dispositif d'amortissement pour engin spatial tel que défini dans la revendication 8, dans lequel les première et deuxième pièces métalliques présentent une structure ramifiée, la structure d'amortissement en élastomère solide étant disposée entre la première pièce métallique et la deuxième pièce métallique de manière à être en contact à la fois avec des branches de la structure ramifiée de la première pièce métallique et avec des branches de la structure ramifiée de la première pièce métallique.

Par « structure ramifiée », on comprend une structure en forme d'arbre, comprenant un tronc principal s'étendant selon une direction principale et étant fixé à la structure porteuse et au composant à isoler, le tronc principal se divisant en deux ou plus branches secondaires, elles-mêmes se divisant en plusieurs branches, jusqu'à un sommet de la structure ramifiée. Selon cette configuration, la structure d'amortissement en élastomère est disposée entre et autour des branches de la structure ramifiée de la première pièce métallique et de la deuxième pièce métallique. En d'autres termes, des branches de la structure ramifiée de la première pièce métallique, ainsi que des branches de la structure ramifiée de la deuxième pièce métallique, sont imprégnées dans l'élastomère de la structure d'amortissement.

Les sommets respectifs de la structure ramifiée de la première et de la deuxième pièce métallique peuvent être disjointes ou, de manière alternativement, être reliées entre elles, de manière à conférer à la structure métallique, une configuration monobloc.

Cette structure permet d'assurer une fonction d'amortissement pour différents mouvements du composant à isoler par rapport à la structure porteuse, notamment des déplacements axiaux le long de la direction principale de la structure ramifiée, des déplacements transverses par rapport à cette direction principale, des rotations autour de cette direction, ou des flexions dans différentes directions.

Dans certains modes de réalisation, les première et deuxième pièces métalliques comprennent une portion ovoïde, la portion ovoïde de la deuxième pièce métallique étant disposée à l'intérieur de la portion ovoïde de la première pièce métallique.

En d'autres termes, le squelette externe comprend l'enveloppe externe de la portion ovoïde de la première pièce métallique, et le logement interne est l'espace à l'intérieur de ladite enveloppe externe, dans lequel est disposée la portion ovoïde de la deuxième pièce métallique.

La première et la deuxième pièce métallique peuvent comprendre une portion en forme de tige, ou de tronc, s'étendant selon un axe longitudinal depuis la structure porteuse et le composant à isoler, au bout de laquelle se trouve la portion ovoïde. Selon cette configuration, le dispositif d'amortissement peut prendre la forme d'une liaison rotule. Plus précisément, la portion ovoïde de la deuxième pièce métallique est disposée à l'intérieur de la portion ovoïde de la première pièce métallique, en étant imprégnée dans la structure d'amortissement en élastomère solide. Par ailleurs, la portion ovoïde de la deuxième pièce métallique peut être espacée de la portion ovoïde de la première pièce métallique par la structure d'amortissement uniquement. De manière alternative, la portion ovoïde de la deuxième pièce métallique peut être localement en contact avec la portion ovoïde de la première pièce métallique.

Cette structure permet d'assurer une fonction d'amortissement pour différents mouvements du composant à isoler par rapport à la structure porteuse, notamment des déplacements axiaux le long de l'axe longitudinal des tiges de la première et de la deuxième pièce métallique, des déplacements transverses par rapport à cet axe longitudinal, des rotations autour de cet axe, ou des flexions dans différentes directions.

Le présent exposé concerne également un engin spatial comprenant un dispositif d'amortissement selon l'un quelconque des modes de réalisation précédents.

Le présent exposé concerne également un procédé de fabrication d'un dispositif d'amortissement pour engin spatial selon l'un quelconque des modes de réalisation précédents, le procédé de fabrication tel que défini dans la revendication 11 comprenant :
- la fabrication d'une structure métallique par fabrication additive, la structure métallique comprenant une première pièce métallique et une deuxième pièce métallique,
- la coulée d'un élastomère liquide entre la première pièce métallique et la deuxième pièce métallique de manière à ce que l'élastomère liquide soit en contact à la fois avec des parois de la première pièce métallique et des parois de la deuxième pièce métallique,
- la polymérisation de l'élastomère liquide, de manière à obtenir une structure d'amortissement en élastomère solide.

La première pièce métallique comprend un squelette externe et un logement interne à l'intérieur du squelette externe, et la deuxième pièce métallique est disposée au moins en partie à l'intérieur du logement interne de la première pièce métallique, l'élastomère liquide étant coulé dans le logement interne de la première pièce métallique, l'élastomère étant ensuite polymérisé dans le logement interne de manière à obtenir une structure d'amortissement en élastomère solide.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente schématiquement une section longitudinale d'une portion d'engin spatial comprenant un dispositif d'amortissement selon le présent exposé,
[Fig. 2A-2B] La figure 2A représente une section transversale du dispositif d'amortissement de la figure 1 selon un premier mode de réalisation, et la figure 2B représente une section transversale du dispositif d'amortissement de la figure 1 selon un exemple modifié du premier mode de réalisation,
[Fig. 3] La figure 3 représente une section transversale du dispositif d'amortissement de la figure 1 selon un deuxième mode de réalisation,
[Fig. 4A-4B] les figures 4A et 4B représentent une section longitudinale d'un dispositif d'amortissement selon un troisième mode de réalisation,
[Fig. 5] la figure 5 représente une section longitudinale d'un dispositif d'amortissement selon un quatrième mode de réalisation,
[Fig. 6] la figure 6 représente un exemple modifié du dispositif d'amortissement selon le quatrième mode de réalisation.

### Description des modes de réalisation

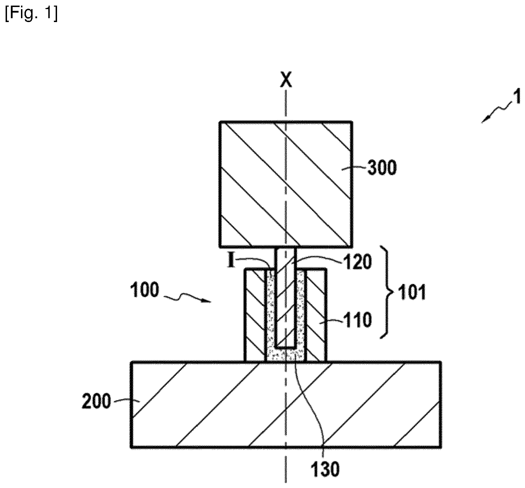

La figure 1 représente schématiquement une vue en coupe d'une portion d'un engin spatial 1 comprenant une structure porteuse 200, par exemple un carter fixe de l'engin spatial 1, un composant à isoler 300, par exemple une petite ligne fluide ou un petit équipement tel qu'un boîtier électrique ou une électrovanne, et un dispositif d'amortissement 100 selon le présent exposé.

Dans cet exemple, le dispositif d'amortissement 100 est axisymétrique autour d'une direction longitudinale X, et est configuré pour amortir les déplacements relatifs du composant à isoler 300 par rapport à la structure porteuse 200 le long ou autour de cette direction longitudinale X, ou selon des directions transversales à cette direction longitudinale X.

Le dispositif d'amortissement 100 comprend essentiellement deux matériaux distincts, à savoir une structure métallique 101 comprenant une première pièce métallique 110 et une deuxième pièce métallique 120, et une structure d'amortissement 130 en élastomère solide. La structure métallique 101 comprend par exemple du titane, un superalliage à base de nickel ou de l'aluminium, et la structure d'amortissement 130 en élastomère solide comprend par exemple du polyuréthane, du néoprène, ou de l'élastomère butyl.

Dans l'exemple illustré sur la figure 1, la première pièce métallique 110 présente une forme tubulaire dont l'axe central correspond à la direction longitudinale X, et est fixée à la structure porteuse 200, par exemple par soudure, par brasage ou par liaison vissée. La première pièce métallique 110 comprend un squelette externe 111, correspondant à la paroi du tube, ce squelette externe 111 formant un logement interne I, correspondant au centre du tube.

La deuxième pièce métallique 120 présente une forme cylindrique dont l'axe central correspond également à la direction longitudinale X, et est fixée au composant à isoler 300, par exemple par soudure, par brasage ou par liaison vissée. Cette forme cylindrique n'est pas limitative, la deuxième pièce métallique 120 pouvant également présenter une forme tubulaire, par exemple. Une partie de la deuxième pièce métallique 120 est disposée dans le logement interne I. En d'autres termes, la deuxième pièce métallique 120 est en partie emmanchée dans la première pièce métallique 110.

Le logement interne I est rempli, de préférence entièrement, par la structure d'amortissement 130 en élastomère solide. Par conséquent, la partie de la deuxième pièce métallique 130 disposée dans le logement interne I est imprégnée dans l'élastomère solide de la structure d'amortissement 130.

Un procédé de fabrication du dispositif d'amortissement 100 va être décrit dans le paragraphe suivant.

La structure métallique 101 est fabriquée par fabrication additive, c'est-à-dire par fusion laser de couches successives de poudre métallique, par exemple un acier, un alliage de nickel (Inconel 718^{®}, Waspaloy X^{®}), un alliage de titane ou un alliage d'aluminium. On comprend donc que la première pièce métallique 110 et la deuxième pièce métallique 120 sont fabriquées au cours d'une même opération, éventuellement de manière monobloc lorsque que la première pièce métallique 110 et la deuxième pièce métallique 120 sont reliées entre elles par un élément de liaison métallique. Lorsque la première pièce métallique 110 est formée, et la deuxième pièce métallique en partie disposée dans le logement interne I de la première pièce métallique 110, un élastomère à l'état liquide est versé dans le logement interne I, de manière à imprégner les parois de la première pièce métallique 110 et de la deuxième pièce métallique 120. L'élastomère liquide est ensuite solidifié par polymérisation, de manière à former la structure d'amortissement 130.

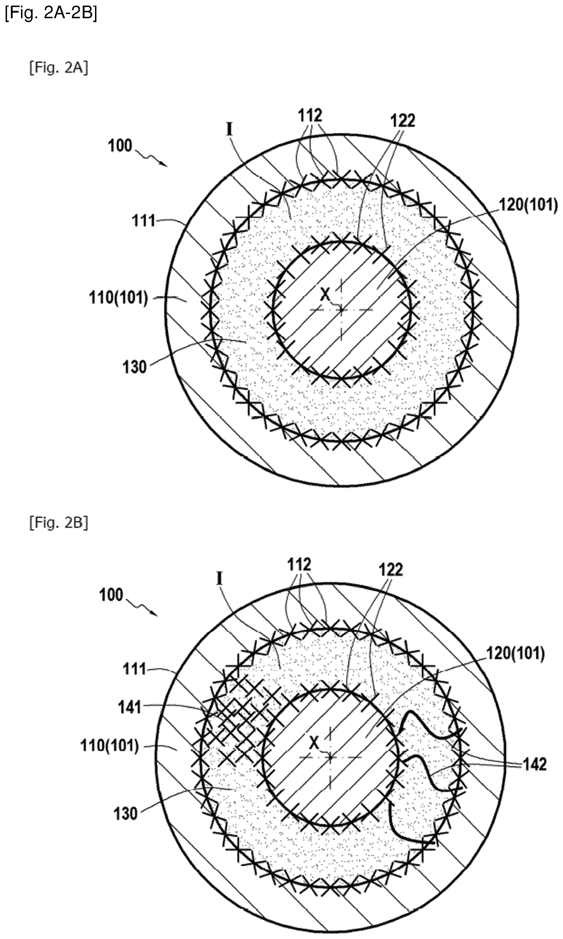

Les figures 2A et 2B représentent une section transversale, c'est-à-dire une section perpendiculaire à la direction longitudinale X, du dispositif d'amortissement 100 de la figure 1, selon un premier mode de réalisation.

Selon ce mode de réalisation, les parois de la première et de la deuxième pièce métallique 110, 120, en contact avec la structure d'amortissement 130, ne sont pas lisses, mais présentent une structure de réseau en treillis 112, 122 (représentées par des croix sur les figures 2A et 2B). Plus précisément, la paroi radialement interne du squelette externe 111 de la première pièce métallique 110 comprend un premier réseau en treillis 112, et la paroi radialement externe de la deuxième pièce métallique 120 comprend un premier réseau en treillis 122. On notera que les termes « radialement externe » ou « radialement interne » et leurs dérivés sont considérés par rapport à la direction longitudinale X, une direction radiale étant donc perpendiculaire à cette direction longitudinale X. Cette configuration n'est pas limitative, seule l'une de la première et de la deuxième pièce métallique pouvant comprendre une structure de réseau en treillis, ou une portion seulement de la surface de ces parois peut comprendre cette structure, et pas nécessairement toute la surface.

Cette structure de réseau en treillis 112, 122 est prévue lors de la fabrication de la structure métallique 101 par fabrication additive décrite ci-dessus. Cette structure peut prendre par exemple la forme d'un réseau maillé, alternant les zones pleines et les zones vides, de manière analogue à un grillage. Par conséquent, lors du remplissage du logement interne I par l'élastomère liquide, ce dernier s'infiltre dans les zones vides entre ces mailles. Ainsi, après solidification de l'élastomère par polymérisation, la liaison entre le métal de la structure métallique 101, et la structure d'amortissement 130, s'en trouve améliorée.

La figure 2A représente un premier exemple de ce mode de réalisation, dans lequel la première pièce métallique 110 et la deuxième pièce métallique 120 sont disjointes, et séparées l'une de l'autre par la structure d'amortissement 130 uniquement. En d'autres termes, aucune liaison métallique n'existe entre ces deux pièces métalliques.

La figure 2B représente un deuxième exemple de ce mode de réalisation, dans lequel la première pièce métallique 110 et la deuxième pièce métallique 120 sont jointes entre elles par un élément de liaison métallique. En d'autres termes, la première pièce métallique 110 et la deuxième pièce métallique 120 ne sont pas séparées l'une de l'autre uniquement par la structure d'amortissement 130, mais sont également liées par l'élément de liaison métallique. Cet élément de liaison métallique peut être un premier élément de liaison métallique 141, présentant une structure de réseau en treillis analogue au premier réseau en treillis 112 et au deuxième réseau en treillis 122, ou un deuxième élément de liaison métallique 142, comprenant des fils métalliques souples.

Bien que le premier et le deuxième élément de liaison métallique 141, 142 soient représentés simultanément sur la figure 2B, le dispositif d'amortissement 100 peut comprendre uniquement le premier élément de liaison métallique 141, ou uniquement le deuxième élément de liaison métallique 142. De plus, sur la section illustrée sur la figure 2B, le logement interne I présente la forme d'un espace annulaire. Or, sur cette figure, une partie seulement de la circonférence de cet espace annulaire est occupée par l'élément de liaison métallique. Cependant, le premier élément de liaison métallique 141 ou le deuxième élément de liaison métallique 142 peuvent être présent sur toute la circonférence de cet espace annulaire. Ainsi, lorsque la première pièce métallique 110 et la deuxième pièce métallique 120 sont liées entre elles par le premier élément de liaison métallique 141, par exemple, sur toute la circonférence de l'espace annulaire, la structure d'amortissement 130 en élastomère solide est imprégnée entre chaque maille, c'est-à-dire entre chaque zone vide de la structure de réseau en treillis du premier élément de liaison métallique 141.

Le premier ou le deuxième élément de liaison métallique 141, 142 sont fabriqués au cours de la même opération que la première pièce métallique 110 et la deuxième pièce métallique 120, lors de la fabrication de la structure métallique 101 par fabrication additive. La structure métallique 101 forme ainsi une pièce monobloc, comprenant la première pièce métallique 110, la deuxième pièce métallique 120 et la pièce de liaison métallique 141 et/ou 142. Ainsi, lorsque l'élastomère liquide est versé dans le logement interne I au cours de la fabrication du dispositif d'amortissement 100, les éléments de liaison métalliques 141 ou 142 sont également imprégnés par cet élastomère, et emprisonnés dans cet élastomère après durcissement de ce dernier par polymérisation.

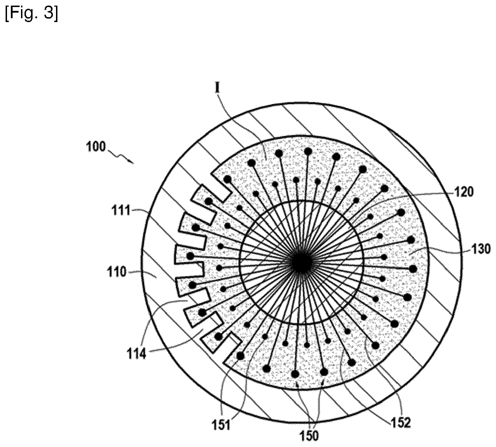

La figure 3 représente une section transversale, c'est-à-dire une section perpendiculaire à la direction longitudinale X, du dispositif d'amortissement 100 de la figure 1, selon un deuxième mode de réalisation.

Selon ce mode de réalisation, les parois de la première et de la deuxième pièce métallique 110, 120, en contact avec la structure d'amortissement 130, ne sont pas lisses, mais comprennent des éléments faisant saillie depuis ces surfaces.

Plus précisément, la paroi radialement interne du squelette externe 111 de la première pièce métallique 110 comprend des parois métalliques radiales 114 faisant saillie depuis ladite paroi radialement interne du squelette externe 111, en direction du centre du dispositif d'amortissement, c'est-à-dire en direction de la direction longitudinale X. Bien que sur la figure 3, une partie seulement de la circonférence de la première pièce métallique 110 comprend ces parois métalliques radiales 114, ces dernières sont de préférence réparties à intervalles réguliers sur toute la circonférence de la première pièce métallique 110.

Par ailleurs, la paroi radialement externe de la deuxième pièce métallique 120 comprend des axes, ou tiges 150, faisant saillie depuis ladite paroi radialement externe de la deuxième pièce métallique 120, dans une direction s'éloignant de la direction longitudinale X. Ces tiges 150 comprennent chacune un bras de liaison 152 faisant saillie depuis la deuxième pièce métallique 120, jusqu'à une extrémité libre disposée dans la structure d'amortissement 130, cette extrémité libre comprenant une protubérance 151, présentant une forme sphérique, par exemple. La structure du dispositif d'amortissement 100 illustrée sur la figure 3 présente ainsi une forme rayonnante, ou encore une forme de pissenlit. La forme sphérique des extrémités libres n'est pas limitative, d'autres formes, telle qu'une forme cubique, peuvent être envisagées, dès lors que l'extrémité libre de ces tiges 150 permet d'augmenter la surface de contact, et donc le cisaillement, entre la structure métallique 101 et la structure d'amortissement 130.

Les tiges 150 peuvent présenter des longueurs différentes. Sur l'exemple illustré sur la figure 3, des tiges 150 de deux longueurs différentes sont représentées. Les tiges 150 de plus grandes longueurs sont configurées de telle sorte que la protubérance 151 sphérique, à leur extrémité libre, soit disposée entre deux parois métalliques radiales 114 adjacentes. Les tiges 150 sont de préférence réparties sur toute la circonférence de l'espace annulaire entre la première pièce métallique 110 et la deuxième pièce métallique 120. Le dispositif d'amortissement 100 comprend un nombre de tiges 150 supérieur à dix, de préférence supérieur à trente, de préférence encore supérieur à cinquante.

Les parois métalliques radiales 114 et les tiges 150 sont fabriquées au cours de la même opération que la première pièce métallique 110 et la deuxième pièce métallique 120, lors de la fabrication de la structure métallique 101 par fabrication additive. Selon ce mode de réalisation, la première pièce métallique 110 et la deuxième pièce métallique 120 sont deux pièces indépendantes l'une de l'autre, reliées entre elles uniquement par la structure d'amortissement 130 en élastomère solide. Lorsque l'élastomère liquide est versé dans le logement interne I au cours de la fabrication du dispositif d'amortissement 100, Les parois métalliques radiales 114 et les tiges 150 sont également imprégnés par cet élastomère, et emprisonnés dans cet élastomère après durcissement de ce dernier par polymérisation.

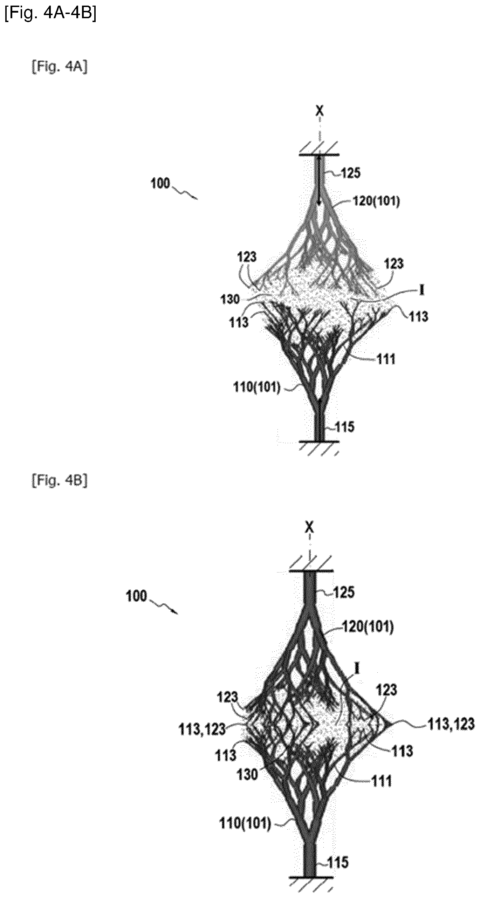

Les figures 4A et 4B représentent une section longitudinale, c'est-à-dire une section parallèle à la direction longitudinale X, du dispositif d'amortissement 100 selon un troisième mode de réalisation.

Selon ce mode de réalisation, chacune de la première et la deuxième pièce métallique 110, 120, ne présente pas une forme de révolution telle que la forme tubulaire ou cylindrique selon les premier et deuxième modes de réalisation, mais présente une structure ramifiée, ou structure en arborescence. En particulier, le squelette externe 111 de la première pièce métallique 110 comprend les branches de la structure ramifiée, et le logement interne I comprend les espaces entre ces branches. Selon ce mode de réalisation, le logement interne I comprend également l'espace autour de ces branches, notamment au voisinage du sommet de ces branches.

La première pièce métallique 110 comprend un tronc principal 115 unique solidaire de la structure porteuse 200 (non représentée sur la figure 4), et s'étendant dans la direction longitudinale X depuis cette structure porteuse 200. Ce tronc principal 115 se divise ensuite en deux ou plus branches secondaires, elles-mêmes se divisant en plusieurs branches, jusqu'à des sommets 113 de chaque branche de la structure ramifiée. De même, la deuxième pièce métallique 120 comprend un tronc principal 125 unique solidaire du composant à isoler 300 (non représenté sur la figure 4), et s'étendant dans la direction longitudinale X depuis ce composant à isoler 300. Ce tronc principal 125 se divise ensuite en deux ou plus branches secondaires, elles-mêmes se divisant en plusieurs branches, jusqu'à des sommets 123 de chaque branche de la structure ramifiée. Ces sommets 123 sont configurés pour être disposés au moins en partie dans le logement interne I, c'est-à-dire dans les espaces entre les branches de la structure ramifiée de la première pièce métallique 110.

Ainsi, lorsque l'élastomère liquide est versé dans le logement interne I au cours de la fabrication du dispositif d'amortissement 100, les sommets 113 et 123 sont également imprégnés par cet élastomère, et emprisonnés dans cet élastomère après durcissement de ce dernier par polymérisation.

La figure 4A représente un premier exemple de ce mode de réalisation, dans lequel les sommets respectifs 113 et 123 de la première pièce métallique 110 et de la deuxième pièce métallique 120 sont disjoints l'un de l'autre. En d'autres termes, la première pièce métallique 110 et la deuxième pièce métallique 120 sont disjointes et séparées l'une de l'autre par la structure d'amortissement 130 uniquement. Ainsi, aucune liaison métallique n'existe entre ces deux pièces métalliques. En outre, par souci de clarté, et pour illustrer le fait que les sommets 113 et 123 sont disjoints les uns des autres, les sommets 113 et 123 des branches sont représentés à distances les uns des autres. Néanmoins, à l'état initial, les sommets 123 de la structure ramifiée de la deuxième pièce métallique 120 peuvent être disposés dans les espaces entre les sommets 113 de la structure ramifiée de la première pièce métallique 110, en étant enchevêtrés entre les branches de cette dernière.

La figure 4B représente un deuxième exemple de ce mode de réalisation, dans lequel la première pièce métallique 110 et la deuxième pièce métallique 120 sont jointes entre elles par un élément de liaison métallique. En d'autres termes, la première pièce métallique 110 et la deuxième pièce métallique 120 ne sont pas séparées l'une de l'autre uniquement par la structure d'amortissement 130, mais sont également liées par l'élément de liaison métallique. Dans cet exemple, l'élément de liaison métallique est en fait une prolongation des extrémités respectives des branches de la structure ramifiée de la première et de la deuxième pièce métallique 110, 120, de telles sorte qu'au moins certains des sommets 113 et 123 sont joint entre eux. La première pièce métallique 110 et la deuxième pièce métallique 120 sont fabriquées lors de la fabrication de la structure métallique 101 par fabrication additive. La structure métallique 101 forme ainsi une pièce monobloc, comprenant la structure ramifiée de la première pièce métallique 110 et de la deuxième pièce métallique 120, dont au moins certains des sommets 113 et 123 sont joints.

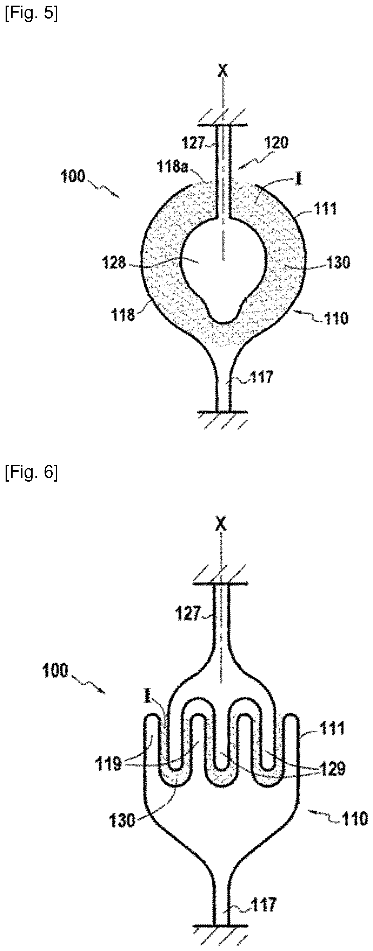

La figure 5 représente une section longitudinale, c'est-à-dire une section parallèle à la direction longitudinale X, du dispositif d'amortissement 100 selon un quatrième mode de réalisation.

Selon ce mode de réalisation, la première et la deuxième pièce métallique 110, 120, ne présente pas une forme tubulaire ou cylindrique telles que selon les premier et deuxième modes de réalisation, mais présentent une structure ovoïde, ou encore une structure en forme d'oignon.

Plus précisément, la première pièce métallique 110 comprend un tronc principal 117 solidaire de la structure porteuse 200 (non représentée sur la figure 5), et s'étendant dans la direction longitudinale X depuis cette structure porteuse 200. Ce tronc principal 117 comprend à son extrémité une portion ovoïde 118. Cette portion ovoïde 118 constitue le squelette externe 111 de la première pièce métallique 110.

De même, la deuxième pièce métallique 120 comprend un tronc principal 127 solidaire du composant à isoler 300 (non représenté sur la figure 5), et s'étendant dans la direction longitudinale X depuis ce composant à isoler 300. Ce tronc principal 127 comprend à son extrémité une portion ovoïde 128. Cette portion ovoïde 128, en forme d'oignon, est disposée dans le logement interne I de la première pièce métallique 110, en étant imprégné dans la structure d'amortissement 130 en élastomère solide, présente dans ce logement interne I.

Selon cette configuration, le dispositif d'amortissement 100 prend ainsi la forme d'une liaison rotule, permettant d'accompagner, et d'amortir les mouvements entre le composant à isoler 300 et la structure porteuse 200, dans la direction longitudinale X, mais également dans les directions transversales à cette direction longitudinale X, et les mouvements de rotation autour de ces différentes directions. De plus, en cas de mouvements d'amplitude importante entre la structure porteuse 200 et le composant à isoler 300, la portion ovoïde 128 est susceptible de venir en butée contre la portion ovoïde 118 selon des directions transversales à la direction longitudinale X, mais également selon la direction longitudinale X. En effet, la portion ovoïde 118 comprend, à son extrémité, une ouverture 118a à travers laquelle le tronc 127 de la deuxième pièce métallique 120 est engagé, cette ouverture 118a présentant un diamètre plus faible que le diamètre de la portion ovoïde 128, disposée à l'intérieur de la portion ovoïde 118.

Selon ce mode de réalisation, la première pièce métallique 110 et la deuxième pièce métallique 120 sont disjointes et séparées l'une de l'autre par la structure d'amortissement 130 uniquement. Ainsi, aucune liaison métallique n'existe entre ces deux pièces métalliques.

De manière alternative (non illustrée), une partie au moins des portions ovoïdes 118 et 128 de la première pièce métallique 110 et de la deuxième pièce métallique 120 respectivement peuvent être liées entre elles. Par exemple, la portion ovoïde 128 peut comporter des excroissances fibreuses à sa surface, ces excroissances étant reliées à la surface de la portion ovoïde 118. Chacun de ces bras de liaisons peut être de préférence disposé en spirale autour de la direction longitudinale X de manière à relier les deux portions ovoïdes 118, 128. Ce motif permet de générer une rotation du composant à isoler 300 par rapport à la structure porteuse 200, lorsque le composant à isoler 300 s'éloigne de la structure porteuse 200. Le fait de générer une telle rotation permet d'augmenter les contraintes de cisaillement dans l'élastomère solide 130, ainsi que le volume des zones de la structure d'amortissement 130 fortement cisaillées, de manière à augmenter le pouvoir dissipatif, et donc le pouvoir amortissant du dispositif d'amortissement 100. Une partie des bras de liaison en spirales peut être disposée selon un premier motif, dans lequel chacun des bras est orienté en spirale dans le sens horaire, et une autre partie des bras de liaison en spirales peut être disposée selon un second motif, dans lequel chacun des bras est orienté en spirale dans le sens anti horaire. Cela permet d'éviter un couplage de comportement de type « traction-torsion ».

La figure 6 représente un exemple modifié du dispositif d'amortissement 100 illustré sur la figure 5.

Selon cet exemple, la première et la deuxième pièce métallique 110, 120 comprennent, à l'extrémité de leur tronc principale 117, 127 respectifs, une pluralité de portions allongées 119, 129, imbriquées les unes dans les autres. Le squelette externe 111 de la première pièce métallique 110 comprend les portions allongées 119, et le logement interne I sont les espaces entre ces portions allongées 119, comprenant la structure d'amortissement 130 en élastomère solide.

Selon cette configuration, le dispositif d'amortissement 100 prend ainsi la forme d'une « tulipe » ou « d'os de genou », permettant d'accompagner, et d'amortir les mouvements entre le composant à isoler 300 et la structure porteuse 200, dans la direction longitudinale X, mais également dans les directions transversales à cette direction longitudinale X. Toutefois, selon cette configuration, en cas de mouvements d'amplitude importante entre la structure porteuse 200 et le composant à isoler 300, les portions allongées 129 sont susceptibles de venir en butée contre les portions allongées 119, selon des directions transversales à la direction longitudinale X uniquement. En effet, en cas d'éloignement entre le composant à isoler 300 et la structure porteuse 200, la première et la deuxième pièce métallique 110, 120 ne viennent pas en butée l'une avec l'autre selon la direction longitudinale X, les diamètres des portions allongées 129 étant inférieurs aux diamètres des espaces entre les portions allongées 119, dans lesquels sont imbriquées les portions allongées 129.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif d'amortissement (100) pour engin spatial (1), configuré pour amortir les vibrations entre un composant à isoler (300) et une structure porteuse (200) de l'engin spatial (1), le dispositif d'amortissement (100) comprenant :
- une structure métallique (101) obtenue par fabrication additive et comprenant une première pièce métallique (110) configurée pour être fixée à l'un du composant à isoler (300) ou de la structure porteuse (200), et une deuxième pièce métallique (120) configurée pour être fixée à l'autre du composant à isoler (300) ou de la structure porteuse (200),
- une structure d'amortissement (130) en élastomère solide disposée entre la première pièce métallique (110) et la deuxième pièce métallique (120), de manière à être en contact à la fois avec des parois de la première pièce métallique (110) et avec des parois de la deuxième pièce métallique (120), la structure métallique (101) étant obtenue par fabrication additive de telle sorte qu'au moins une portion de la surface de la première pièce métallique (110) et/ou de la deuxième pièce métallique (120), en contact avec la structure d'amortissement (130), présente une structure de réseau en treillis (112, 122), **caractérisé en ce que** la première pièce métallique (110) comprend un squelette externe (111) et un logement interne (I) à l'intérieur du squelette externe (111), la structure d'amortissement (130) en élastomère solide étant disposée dans le logement interne (I), et la deuxième pièce métallique (120) étant disposée au moins en partie à l'intérieur du logement interne (I) de la première pièce métallique (110).

2. Dispositif d'amortissement (100) selon la revendication 1, dans lequel la première et la deuxième pièce métallique (110, 120) sont deux pièces distinctes reliées entre elles uniquement par la structure d'amortissement (130).

3. Dispositif d'amortissement (100) selon la revendication 1, dans lequel la structure métallique (101) comprend au moins un élément de liaison métallique (141, 142), la première et la deuxième pièce métallique (110, 120) étant reliées entre elles par la structure d'amortissement (130) et par l'élément de liaison métallique (141, 142).

4. Dispositif d'amortissement (100) selon la revendication 3, dans lequel l'élément de liaison métallique (141, 142) présente une structure de réseau en treillis (141), ou est un fil métallique souple (142).

5. Dispositif d'amortissement (100) selon l'une quelconque des revendications 1 à 4, dans lequel la première pièce métallique (110) au moins présente une forme de tube comprenant un axe longitudinal (X), la deuxième pièce métallique (120) étant disposée au moins en partie dans l'espace à l'intérieur du tube.

6. Dispositif d'amortissement (100) selon la revendication 5, comprenant une pluralité de tiges métalliques radiales (150) s'étendant dans la structure d'amortissement (130), faisant saillie radialement depuis la première pièce métallique (110) ou la deuxième pièce métallique (120), et comprenant une extrémité libre (151) disposée dans la structure d'amortissement (130).

7. Dispositif d'amortissement (100) selon la revendication 6, comprenant des parois métalliques radiales (114) faisant saillie depuis l'une de la première pièce métallique (110) ou de la deuxième pièce métallique (120), les extrémités libres (151) d'au moins une partie des tiges métalliques (150) faisant saillie depuis l'autre de la première pièce métallique (110) ou de la deuxième pièce métallique (120) étant disposées entre deux parois métalliques (114).

8. Dispositif d'amortissement (100) pour engin spatial (1), configuré pour amortir les vibrations entre un composant à isoler (300) et une structure porteuse (200) de l'engin spatial (1), le dispositif d'amortissement (100) comprenant :
- une structure métallique (101) obtenue par fabrication additive et comprenant une première pièce métallique (110) configurée pour être fixée à l'un du composant à isoler (300) ou de la structure porteuse (200), et une deuxième pièce métallique (120) configurée pour être fixée à l'autre du composant à isoler (300) ou de la structure porteuse (200),
- une structure d'amortissement (130) en élastomère solide disposée entre la première pièce métallique (110) et la deuxième pièce métallique (120), de manière à être en contact à la fois avec des parois de la première pièce métallique (110) et avec des parois de la deuxième pièce métallique (120), la structure métallique (101) étant obtenue par fabrication additive de telle sorte qu'au moins une portion de la surface de la première pièce métallique (110) et/ou de la deuxième pièce métallique (120), en contact avec la structure d'amortissement (130), présente une structure de réseau en treillis (112, 122), **caractérisé en ce que** les première et deuxième pièces métalliques (110, 120) présentent une structure ramifiée, comprenant un tronc principal s'étendant selon une direction principale et étant fixé à la structure porteuse et au composant à isoler, le tronc principal se divisant en deux ou plus branches secondaires, elles-mêmes se divisant en plusieurs branches, jusqu'à un sommet de la structure ramifiée, la structure d'amortissement (130) en élastomère solide étant disposée entre la première pièce métallique (110) et la deuxième pièce métallique (120) de manière à être en contact à la fois avec des branches de la structure ramifiée de la première pièce métallique (110) et avec des branches de la structure ramifiée de la première pièce métallique (120).

9. Dispositif d'amortissement (100) selon la revendication 1, dans lequel les première et deuxième pièces métalliques (110, 120) comprennent une portion ovoïde (118, 128), la portion ovoïde (128) de la deuxième pièce métallique (120) étant disposée à l'intérieur de la portion ovoïde (118) de la première pièce métallique (110).

10. Engin spatial (1) comprenant un dispositif d'amortissement (100) selon l'une quelconque des revendications précédentes.

11. Procédé de fabrication d'un dispositif d'amortissement (100) pour engin spatial (1) selon l'une quelconque des revendications 1 à 7, 9 et 10 comprenant :
- la fabrication de la structure métallique (101) par fabrication additive, la structure métallique (101) comprenant une première pièce métallique (110) et une deuxième pièce métallique (120), la première pièce métallique (110) comprenant un squelette externe (111) et un logement interne (I) à l'intérieur du squelette externe (111), la deuxième pièce métallique (120) étant disposée au moins en partie à l'intérieur du logement interne (I) de la première pièce métallique (110)
- la coulée d'un élastomère liquide dans le logement interne (I) de la première pièce métallique (110), entre la première pièce métallique (110) et la deuxième pièce métallique (120) de manière à ce que l'élastomère liquide soit en contact à la fois avec des parois de la première pièce métallique (110) et des parois de la deuxième pièce métallique (120),
- la polymérisation de l'élastomère liquide dans le logement interne (I), de manière à obtenir une structure d'amortissement (130) en élastomère solide, la structure métallique (101) étant obtenue par fabrication additive de telle sorte qu'au moins une portion de la surface de la première pièce métallique (110) et/ou de la deuxième pièce métallique (120), en contact avec la structure d'amortissement (130), présente une structure de réseau en treillis (112, 122).

## Patentansprüche

1. Dämpfungsvorrichtung (100) für Raumschiff (1), die konfiguriert ist, um die Schwingungen zwischen einer zu isolierenden Komponente (300) und einer tragenden Struktur (200) des Raumschiffs (1) zu dämpfen, die Dämpfungsvorrichtung (100) umfassend:
- eine Metallstruktur (101), die durch additive Fertigung erlangt wird und umfassend ein erstes Metallteil (110), das konfiguriert ist, um an einem der zu isolierenden Komponente (300) oder der tragenden Struktur (200) befestigt zu sein, und ein zweites Metallteil (120), das konfiguriert ist, um an dem anderen der zu isolierenden Komponente (300) oder der tragenden Struktur (200) befestigt zu sein,
- eine Dämpfungsstruktur (130) aus einem festen Elastomer, die zwischen dem ersten Metallteil (110) und dem zweiten Metallteil (120) angeordnet ist, sodass sie sowohl mit Wänden des ersten Metallteils (110) als auch mit Wänden des zweiten Metallteils (120) in Kontakt ist, wobei die Metallstruktur (101) durch additive Fertigung erlangt wird, sodass zumindest ein Teil der Oberfläche des ersten Metallteils (110) und/oder des zweiten Metallteils (120) in Kontakt mit der Dämpfungsstruktur (130) eine Gitternetzstruktur (112, 122) aufweist, **dadurch gekennzeichnet, dass** das erste Metallteil (110) ein äußeres Skelett (111) und eine innere Aufnahme (I) innerhalb des äußeren Skeletts (111) umfasst, wobei die Dämpfungsstruktur (130) aus einem festen Elastomer in der inneren Aufnahme (I) angeordnet ist, und das zweite Metallteil (120) zumindest teilweise innerhalb der inneren Anordnung (I) des ersten Metallteils (110) angeordnet ist.

2. Dämpfungsvorrichtung (100) nach Anspruch 1, wobei das erste und das zweite Metallteil (110, 120) zwei getrennte Teile sind, die nur durch die Dämpfungsstruktur (130) miteinander verbunden sind.

3. Dämpfungsvorrichtung (100) nach Anspruch 1, wobei die Metallstruktur (101) mindestens ein metallisches Verbindungselement (141, 142) umfasst, wobei das erste und das zweite Metallteil (110, 120) durch die Dämpfungsstruktur (130) und durch das metallische Verbindungselement (141, 142) miteinander verbunden sind.

4. Dämpfungsvorrichtung (100) nach Anspruch 3, wobei das metallische Verbindungselement (141, 142) eine Gitternetzstruktur (141) aufweist oder ein flexibler Metalldraht (142) ist.

5. Dämpfungsvorrichtung (100) nach einem der Ansprüche 1 bis 4, wobei das erste Metallteil (110) zumindest eine Rohrform aufweist, umfassend eine Längsachse (X), wobei das zweite Metallteil (120) zumindest teilweise in dem Raum im Innern des Rohrs angeordnet ist.

6. Dämpfungsvorrichtung (100) nach Anspruch 5, umfassend eine Vielzahl von radialen Metallstäben (150), die sich in der Dämpfungsstruktur (130) erstrecken, radial von dem ersten Metallteil (110) oder dem zweiten Metallteil (120) hervorstehen und umfassend ein freies Ende (151), das in der Dämpfungsstruktur (130) angeordnet ist.

7. Dämpfungsvorrichtung (100) nach Anspruch 6, umfassend radiale Metallwände (114), die von einem von dem ersten Metallteil (110) oder dem zweiten Metallteil (120) hervorstehen, wobei die freien Enden (151) von zumindest einem Teil der Metallstäbe (150), die von dem anderen von dem ersten Metallteil (110) oder dem zweiten Metallteil (120) hervorstehen, zwischen zwei Metallwänden (114) angeordnet sind.

8. Dämpfungsvorrichtung (100) für Raumschiff (1), die konfiguriert ist, um die Schwingungen zwischen einer zu isolierenden Komponente (300) und einer tragenden Struktur (200) des Raumschiffs (1) zu dämpfen, die Dämpfungsvorrichtung (100) umfassend:
- eine Metallstruktur (101), die durch additive Fertigung erlangt wird und umfassend ein erstes Metallteil (110), das konfiguriert ist, um an einem der zu isolierenden Komponente (300) oder der tragenden Struktur (200) befestigt zu sein, und ein zweites Metallteil (120), das konfiguriert ist, um an dem anderen der zu isolierenden Komponente (300) oder der tragenden Struktur (200) befestigt zu sein,
- eine Dämpfungsstruktur (130) aus einem festen Elastomer, die zwischen dem ersten Metallteil (110) und dem zweiten Metallteil (120) angeordnet ist, sodass sie sowohl mit Wänden des ersten Metallteils (110) als auch mit Wänden des zweiten Metallteils (120) in Kontakt ist, wobei die Metallstruktur (101) durch additive Fertigung erlangt wird, sodass zumindest ein Teil der Oberfläche des ersten Metallteils (110) und/oder des zweiten Metallteils (120) in Kontakt mit der Dämpfungsstruktur (130) eine Gitternetzstruktur (112, 122) aufweist, **dadurch gekennzeichnet, dass** das erste und das zweite Metallteil (110, 120) eine verzweigte Struktur aufweisen, umfassend einen Hauptstamm, der sich in einer Hauptrichtung erstreckt und an der tragenden Struktur und der zu isolierenden Komponente befestigt ist, wobei sich der Hauptstamm in zwei oder mehrere sekundäre Zweige aufteilt, die sich wiederum bis zu einem Gipfel der verzweigten Struktur in mehrere Zweige aufteilen, die Dämpfungsstruktur (130) aus einem festen Elastomer zwischen dem ersten Metallteil (110) und dem zweiten Metallteil (120) angeordnet ist, sodass sie sowohl mit Zweigen der verzweigten Struktur des ersten Metallteils (110) als auch mit Schenkeln der verzweigten Struktur des ersten Metallteils (120) in Kontakt sind.

9. Dämpfungsvorrichtung (100) nach Anspruch 1, wobei das erste und das zweite Metallteil (110, 120) einen eiförmigen Abschnitt (118, 128) umfassen, wobei der eiförmige Abschnitt (128) des zweiten Metallteils (120) innerhalb des eiförmigen Abschnitts (118) des ersten Metallteils (110) angeordnet ist.

10. Raumschiff (1), umfassend eine Dämpfungsvorrichtung (100) nach einem der vorherigen Ansprüche.

11. Herstellungsverfahren einer Dämpfungsvorrichtung (100) für ein Raumschiff (1) nach einem der Ansprüche 1 bis 7, 9 und 10, umfassend:
- Herstellen der Metallstruktur (101) durch additive Fertigung, die Metallstruktur (101) umfassend ein erstes Metallteil (110) und ein zweites Metallteil (120), wobei das erste Metallteil (110) ein äußeres Skelett (111) und eine innere Aufnahme (I) im Innern des äußeren Skeletts (111) umfasst, wobei das zweite Metallteil (120) zumindest teilweise im Innern der inneren Aufnahme (I) des ersten Metallteils (110) angeordnet ist
- Gießen eines flüssigen Elastomers in die innere Aufnahme (I) des ersten Metallteils (110) zwischen dem ersten Metallteil (110) und dem zweiten Metallteil (120), sodass das flüssige Elastomer sowohl mit Wänden des ersten Metallteils (110) als auch mit Wänden des zweiten Metallteils (120) in Kontakt ist,
- Polymerisieren des flüssigen Elastomers in der inneren Aufnahme (I), um eine Dämpfungsstruktur (130) aus festem Elastomer zu erlangen, wobei die Metallstruktur (101) durch additive Fertigung erlangt wird, sodass mindestens ein Teil der Oberfläche des ersten Metallteils (110) und/oder des zweiten Metallteils (120), die mit der Dämpfungsstruktur (130) in Kontakt ist, eine Gitternetzstruktur (112, 122) aufweist.

## Claims

1. A damping device (100) for a spacecraft (1) configured to damp vibrations between a component to be isolated (300) and a supporting structure (200) of the spacecraft (1), the damping device (100) comprising:
- a metal structure (101) obtained by additive manufacturing and comprising a first metal part (110) configured to be attached to one of the component to be isolated (300) or of the supporting structure (200), and a second metal part (120) configured to be attached to the other of the component to be isolated (300) or the supporting structure (200),
- a solid elastomer damping structure (130) arranged between the first metal part (110) and the second metal part (120), so as to be in contact both with walls of the first metal part (110) and with walls of the second metal part (120), the metal structure (101) being produced by additive manufacturing such that at least a portion of the surface of the first metal part (110) and/or the second metal part (120), in contact with the damping structure (130), has a lattice structure (112, 122), **characterized in that** the first metal part (110) comprises an outer skeleton (111) and an inner housing (I) within the outer skeleton (111), the solid elastomer damping structure (130) being arranged in the inner housing (I), and the second metal part (120) being arranged at least partially inside the inner housing (I) of the first metal part (110).

2. The damping device (100) according to claim 1, wherein the first and second metal parts (110, 120) are two distinct parts connected together only by the damping structure (130).

3. The damping device (100) according to claim 1, wherein the metal structure (101) comprises at least one metal connecting member (141, 142), the first and second metal parts (110, 120) being interconnected by the damping structure (130) and the metal connecting member (141, 142).

4. The damping device (100) according to claim 3, wherein the metal connecting member (141, 142) has a lattice structure (141), or is a flexible metal wire (142).

5. The damping device (100) according to any of claims 1 to 4, wherein the at least one first metal part (110) has a tube shape comprising a longitudinal axis (X), the second metal part (120) being arranged at least partially in the space inside the tube.

6. The damping device (100) according to claim 5, comprising a plurality of radial metal rods (150) extending into the damping structure (130), protruding radially from the first metal part (110) or the second metal part (120), and comprising a free end (151) arranged in the damping structure (130).

7. The damping device (100) according to claim 6, comprising radial metal walls (114) protruding from one of the first metal part (110) or the second metal part (120), the free ends (151) of at least one part of the metal rods (150) protruding from the other of the first metal part (110) or the second metal part (120) being arranged between two metal walls (114).

8. A damping device (100) for a spacecraft (1) configured to damp vibrations between a component to be isolated (300) and a supporting structure (200) of the spacecraft (1), the damping device (100) comprising:
- a metal structure (101) obtained by additive manufacturing and comprising a first metal part (110) configured to be attached to one of the component to be isolated (300) or of the supporting structure (200), and a second metal part (120) configured to be attached to the other of the component to be isolated (300) or of the supporting structure (200),
- a solid elastomer damping structure (130) arranged between the first metal part (110) and the second metal part (120), so as to be in contact both with walls of the first metal part (110) and with walls of the second metal part (120), the metal structure (101) being produced by additive manufacturing such that at least a portion of the surface of the first metal part (110) and/or of the second metal part (120), in contact with the damping structure (130), has a lattice structure (112, 122), **characterized in that** the first and second metal parts (110, 120) have a branched structure, comprising a main trunk extending along a main direction and being attached to the supporting structure and to the component to be isolated, the main trunk dividing into two or a plurality of secondary branches dividing in turn into a plurality of branches, up to an apex of the branched structure, the solid elastomer damping structure (130) being arranged between the first metal part (110) and the second metal part (120) so as to be in contact both with branches of the branched structure of the first metal part (110) and with branches of the branched structure of the second metal part (120).

9. The damping device (100) according to claim 1, wherein the first and second metal parts (110, 120) comprise an ovoid portion (118, 128), the ovoid portion (128) of the second metal part (120) being arranged inside the ovoid portion (118) of the first metal part (110).

10. A spacecraft (1) comprising a damping device (100) according to any of the preceding claims.

11. A method of manufacturing a damping device (100) for a spacecraft (1) according to any of claims 1 to 7, 9 and 10, comprising:
- the manufacture of the metal structure (101) by additive manufacturing, the metal structure (101) comprising a first metal part (110) and a second metal part (120), the first metal part (110) comprising an outer skeleton (111) and an inner housing (I) within the outer skeleton (111), the second metal part (120) being arranged at least partially inside the inner housing (I) of the first metal part (110)
- casting a liquid elastomer into the inner housing (I) of the first metal part (110), between the first metal part (110) and the second metal part (120) so that the liquid elastomer is in contact both with walls of the first metal part (110) and walls of the second metal part (120),
- polymerization of the liquid elastomer in the inner housing (I), so as to obtain a damping structure (130) made of solid elastomer, the metal structure (101) being produced by additive manufacturing such that at least a portion of the surface of the first metal part (110) and/or of the second metal part (120), in contact with the damping structure (130), has a lattice structure (112, 122).
